# EUROPEAN PATENT APPLICATION

(11) **EP 2 755 412 A1**
(43) Date of publication of application: **16.07.2014**
(21) Application number: 11865130.6
(22) Date of filing: 23.11.2011
(51) Int. Cl.: H04W 8/22, H04W 24/00, G06F 9/445

(54) **METHOD AND SYSTEM FOR UPGRADING FIRMWARE OF USER SIDE DEVICE**

(30) Priority: 09.09.2011 CN 201110267074
(71) Applicant: ZTE Corporation, Shenzhen, Guangdong 518057 (CN)
(72) Inventor: ZHOU, Wei, Shenzhen Guangdong 518057 (CN); JIANG, Quansheng, Shenzhen Guangdong 518057 (CN)
(74) Representative: Modiano, Micaela Nadia
(86) International application number: PCT/CN2011/082745
(87) International publication number: WO 2012/151943

(57) **Abstract**

Disclosed are a method and system for upgrading CPE firmware. An upgradable module in the CPE firmware is resolved. Detail information of the module is added to a configuration management file. The implementation of an upgrade management of the upgradable module in the firmware via the configuration management file allows for convenient selection of a corresponding module upgrade. When one module fails a validation during a downloading process, the need to perform a re-download process is obviated for other modules, thus solving the shortcoming in the prior art, in which a unified interface is used for the upgrade of all modules, of having to re-download all module upgrade packets when the validation fails during the download process, thereby improving the efficiency and ease of user of the upgrading.

## Description

### Field

The present invention relates to the network management field in mobile communications, and in particular to a method and system for upgrading Customer Premises Equipment (CPE) firmware.

### Background

With the rapid development of mobile communications and the popularization of mobile devices, the configuration and maintenance of a large amount of mobile devices become more and more difficult, which greatly increases the costs of the network product operators, and the conventional SNMP (Simple Network Management Protocol)-based network management system appears to be powerless when facing numerous mobile devices and cannot adapt to the development speed and scale of the mobile devices and the bandwidth access market. Therefore, a powerful remote management protocol is generated, and currently, the most widely applied remote management protocols are TR069 and OMA (Open Mobile Alliance) protocols.

CWMP (CPE WAN Management Protocol) is one of the technical specifications initiated by the DSL (Digital Subscriber Line) forum, numbered as TR-069, which is therefore also referred to as TR069 protocol. TR069 protocol defines a set of fresh new network management architectures, including universal architectures, message specifications, management models, management methods, management parameters, interaction interfaces and data models, and TR069 is the basis of the remote management of a series of devices of home networks in the DSL forum, including the specifications of some home network devices, such as TR069-CPE (Customer Premises Equipment) wide area network management protocol, TR098-home gateway data model and so on.

TR069 protocol is based on the TCP (Transfer Control Protocol) layer, which is mainly used for managing IP (Internet Protocol) devices, and the focus of TR069 protocol is practical application; and in a DSL access network, since there are numerous users and the deployments thereof are dispersed, it is not easy to perform CPE management and maintenance, and TR069 proposes to perform remote centralized management on CPE by ACS (Auto-Configuration Server).

The OMA alliance is built in 12 June 2002, which is dedicated to improving the quality of the mobile communication service and at the same time solving the data synchronization problem among different networks, thus realizing interconnection and intercommunication. The OMA protocol proposed by the OMA alliance is a unified standard and specification of end-to-end mobile communication which can be used globally and is safe and reliable and easy to operate. Different from TR069 protocol, since the original design intention of the OMA protocol is to support the data synchronization of different devices among different networks, the data transmission of the OMA protocol is not only helpful for the Internet session layer to user HTTP (Hyper Text Transfer Protocol) transmission but also helpful for supporting the wireless network WAP (Wireless Application Protocol) to use WSP (Wireless Session Protocol) to perform data transmission and so on.

The OMA-DM (Device Manage) protocol is a set of management protocols dedicated for mobile and wireless networks defined by the OMA protocol, which is an application of the OMA protocol; and different from the fact that the TR069 protocol is merely used for the HTTP protocol of the Internet, the OMA-DM protocol is definitely independent from the bearer network, and therefore, the OMA-DM protocol application is established over various networks, that is, it can use various network protocols to transmit OMA-DM commands.

Both TR069 protocol and OMA-DM protocol can be used to remotely manage the CPE, acquire the running states of the CPE, modify the parameters of the CPE, upgrade the firmware on the CPE, etc. However, currently, regardless of upgrading all the modules in the CPE firmware or upgrading some modules in the CPE firmware, the server realizes this with a unified method, and if the upgrading fails due to an individual independent module, it is required to perform the download process of the upgrade packet again, which results in a low upgrading efficiency and feasibility of the firmware on the CPE.

### Summary

The technical problem to be solved by the present invention is to provide a method and system for upgrading CPE firmware, which can improve the upgrading efficiency and feasibility of the firmware.

The technical solution employed by the present invention is the method for upgrading CPE firmware, comprising:
a server adding information of the module in the CPE firmware to a management configuration file and upgrading a module to be upgraded in the CPE firmware based on the management configuration file.

Preferably, the server adding the information of the module in the CPE firmware to the management configuration file in particular comprises:
the management configuration file is a parameter tree file; each module corresponds to a node in the parameter tree file, a child node is added under each node, various attributes of the module are stored in leaf nodes of the child node, wherein the attributes comprise module name, information whether there is a dependence module during upgrading, module version information, check code and module integrity check method; and
a module dependence node is added under the child node, and the dependence module information which is needed when upgrading the module is stored in the module dependence node.

Preferably, the server upgrading the module to be upgraded in the CPE firmware based on the management configuration file in particular comprises:
after the server starts a session with the CPE, the server sends to the CPE information of the module to be upgraded; and
the CPE judges the module truly to be upgraded according to the information of the module to be upgraded and downloads the module truly to be upgraded and upgrades same.

Preferably, the information of the module to be upgraded comprises: a module download address, module version information, module check method, a module check code and module size; and
the CPE judging the module truly to be upgraded according to the information of the module to be upgraded and downloading the module truly to be upgraded and upgrading same in particular comprises:
after receiving the information of the module to be upgraded, the CPE judges whether it is consistent with the corresponding module information saved locally, and if yes, then no upgrade is needed; and if there is a module which has inconsistent information, then the module is downloaded according to the module download address; and
the downloaded module is checked according to the check method corresponding to the module, and if the check result is true, then starting to upgrade the module, otherwise, reporting error information to the server.

Preferably, in the case that the server upgrades the CPE firmware based on the OMA-DM protocol, when it is required to upgrade a new module, the server acquires from the CPE information of the new module and adds same to the management configuration file.

Based on the above-mentioned method, the present invention also provides a system for upgrading CPE firmware, comprising:
a server configured to add the module information in the CPE firmware to a management configuration file and upgrade a module to be upgraded in the CPE firmware based on the management configuration file; and
CPE configured to upgrade the module to be upgraded in cooperation with the server.

Preferably, the management configuration file is a parameter tree file; each module corresponds to a node in the parameter tree file, a child node is added under each node, various attributes of the module are stored in leaf nodes of the child node, wherein the attributes comprises: module name, information whether there is a dependence module during upgrading, module version information, check code and module integrity check method; and
a module dependence node is added under the child node, and the dependence module information which is needed when upgrading the module is stored on the module dependence node.

Preferably, the server is further configured to, after starting a session with the CPE, send to the CPE information of the module to be upgraded; and
the CPE is further configured to judge a module truly to be upgraded according to the information of the module to be upgraded and download the module truly to be upgraded and upgrade same.

Preferably, the information of the module to be upgraded comprises: module download address, module version information, module check method, module check code and module size; and
the CPE in particular comprises:
a judgment downloading module configured to, after receiving the information of the module to be upgraded, judge whether it is consistent with the corresponding module information saved locally, and if yes, then need no upgrade; and if there is a module which has inconsistent information, then download the module according to the module download address; and
a check upgrading module configured to check the downloaded module according to the check method corresponding to the module, and if the check result is true, then start to upgrade the module, otherwise, report error information to the server.

Preferably, in the case that the server upgrades the CPE firmware based on the OMA-DM protocol, the server is further configured to, when it is required to upgrade a new module, acquire from the CPE information of the new module and adds same to the management configuration file.

In the method and system for upgrading CPE firmware in the embodiments of the present invention, an upgradable module in the CPE firmware is resolved, detail information of the module is added to a configuration management file, the implementation of an upgrade management of the upgradable module of the firmware via the configuration management file allows for convenient selection of a corresponding module upgrade, when one module fails a validation during a downloading process, the need to perform a re-download process if obviated for other modules, thus solving the shortcoming in the prior art, in which a unified interface is used for the upgrade of all modules, of having to re-download all module upgrade packets when the validation fails during the download process, thereby improving the efficiency and ease of user of the upgrading.

### Brief Description of the Drawings

Fig. 1 is a flowchart of a method for upgrading firmware on CPE in a first embodiment of the present invention;
Fig. 2 is a flowchart of a method for upgrading firmware on CPE in a second embodiment of the present invention;
Fig. 3 is a structural schematic diagram of a system for upgrading firmware on CPE in a third embodiment of the present invention;
Fig. 4 is a schematic diagram of a network communication connection situation in an application example of the present invention;
Fig. 5 is a schematic diagram of a firmware upgrading process applied in an example of the TR069 protocol in the present invention; and
Fig. 6 is a schematic diagram of a firmware upgrading process applied in an example of the OMA-DM protocol in the present invention.

### Detailed Description of the Embodiments

For further explaining technical means employed by the present invention and the effects thereof, the present invention will be described in detail in conjunction with the accompanying drawings and preferred embodiments.

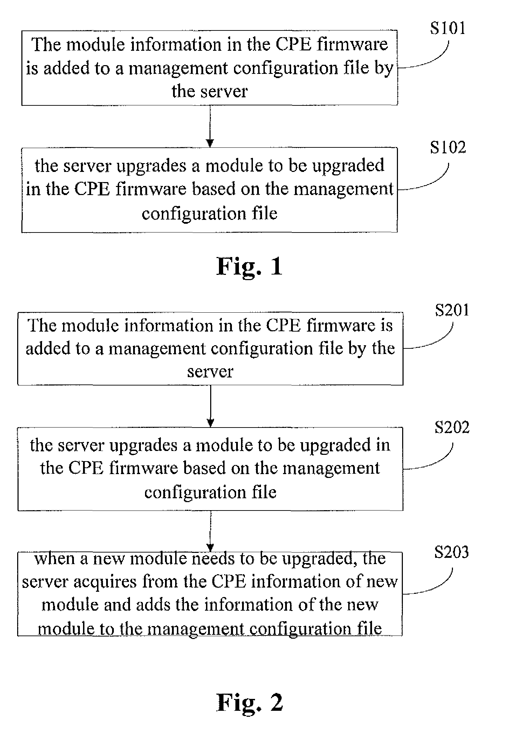

A first embodiment of the present invention introduces a method for upgrading CPE firmware by taking that a server upgrades firmware on CPE based on the TR069 protocol as an example, and as shown in Fig. 1, the method comprises the following particular steps:
step S101: the server adds module information in the CPE firmware to a management configuration file.

In particular, the management configuration file is a parameter tree file based on the home gateway data model TR098 document; each module corresponds to a node in the parameter tree file, which can be viewed as an upgrade interface, which is corresponding to the module, in the management configuration file. A child node is added under each node, leaf nodes of the child node stores various attributes of the module, comprising: a module name, information whether there is a dependence module during upgrading, module version information, check code and module integrity check method; and
a module dependence node is added under the child node, and dependence module information which is needed when upgrading the module is stored in the module dependence node. The leaf node in the present invention is the attribute of a node.

Step S102, the server upgrades the module to be upgraded in the CPE firmware based on the management configuration file. Step S102 in particular can comprise the following steps:
A1, the server starts a session with the CPE.
A2, the server sends information of the module to be upgraded to the CPE. The information of the module to be upgraded comprises: a module download address, module version information, check method of the module, check code of the module and the size of the module.
A3, the CPE judges a module truly to be upgraded according to the information of the module to be upgraded, downloads the module truly to be upgraded, and upgrades the module truly to be upgraded.

In particular, after receiving the information of the module to be upgraded, the CPE judges whether it is consistent with the corresponding module information saved locally, and if yes, then no upgrade is needed; and if there is a module which has inconsistent information, then the module is downloaded according to the download address of the module; and
the downloaded module is checked according to the check method corresponding to the module, and if the check result is true, the module is upgraded, otherwise, error information is reported to the server.

A second embodiment of the present invention introduces a method for upgrading CPE firmware by taking that the a server upgrades CPE firmware based on the OMA-DM protocol as an example, and as shown in Fig. 2, step 201 and step 202 of the method in this embodiment are substantially the same as step 101 and step 102 in the first embodiment, and the difference lies in that the management configuration file is a parameter tree file based on the OMA-DM protocol. Also, this embodiment further comprises the following steps:
step S203, when a new module needs to be upgraded, the server acquires from the CPE information of new module and adds the information of the new module to the management configuration file. Step S203 can in particular comprise:
   B1, the server actively initiates a session to the CPE to acquire the information of the new module to be upgraded;
   B2, the CPE sends the information of the new module to the server; and
   B3, the server initializes the upgrade interface, which is corresponding to the new module, in the management configuration file based on the information of the new module. The server can upgrade a corresponding module through this upgrade interface.

That is to say, when the CPE firmware is upgraded based on the OMA-DM protocol, the demand of upgrading a new module can be met merely by modifying the management configuration file.

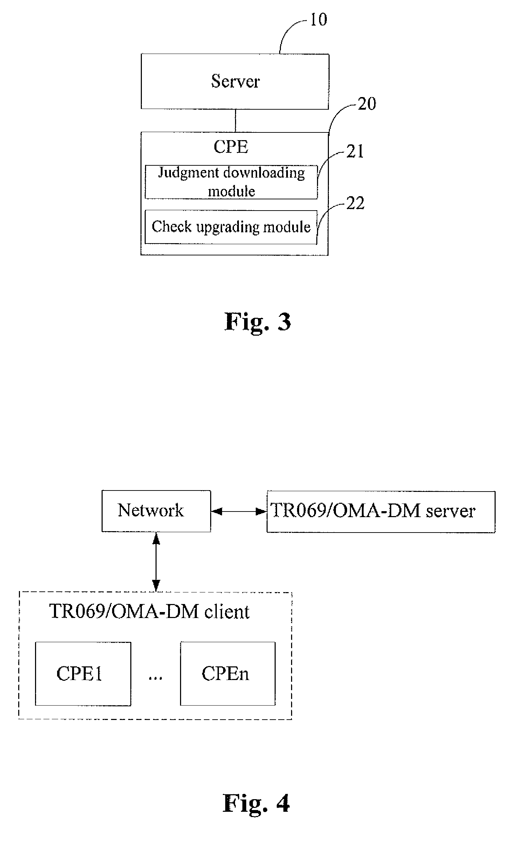

A third embodiment of the present invention introduces a system for upgrading CPE firmware by taking that a server upgrades the CPE firmware based on the TR069 protocol as an example, and as shown in Fig. 3, the system can in particular comprise the following constituent parts:
a server 10 configured to add module information in the CPE firmware 20 to a management configuration file and upgrade a module to be upgraded in the CPE firmware 20 based on the management configuration file.

In particular, the management configuration file is a parameter tree file based on the home gateway data model TR098 document; each module corresponds to a node in the parameter tree file, which can be viewed as an upgrade interface ,which is corresponding to the module, in the management configuration file. A child node is added under each node, various attributes of the module are stored in leafs node of the child node, wherein the attributes comprise: module name, information whether there is a dependence module during upgrading, module version information, check code and module integrity check method;
a module dependence node is added under the child node, and the dependence module information which is needed when upgrading the module is stored in the module dependence node.

Preferably, the server 10 is configured to start a session with the CPE 20, send to the CPE 20 information of the module to be upgraded. The information of the module to be upgraded comprises: a module download address, module version information, a module check method, a module check code and module size.

The CPE 20 is configured to upgrade the module to be upgraded in cooperation with the server 10.

Preferably, the CPE 20 is configured to judge a module truly to be upgraded according to the information of the module to be upgraded and download and upgrade the module truly to be upgraded. The CPE 20 may in particular comprise:
a judgment downloading module 21 configured to, after receiving the information of the module to be upgraded, judge whether the information of the module to be upgraded is consistent with the corresponding module information saved locally, and if yes, then need no upgrade; and if there is a module which has inconsistent information, then download the module according to the download address of the module; and
a check upgrading module 22 configured to check the downloaded module according to the check method corresponding to the module, and if the check result is true, then start to upgrade the module, otherwise, report error information to the server.

A fourth embodiment of the present invention introduces a system for upgrading CPE firmware by taking that a server upgrades the CPE firmware based on the OMA-DM protocol as an example, and the system in this embodiment is substantially the same as that in the third embodiment, and the difference lies in that the management configuration file is a parameter tree file based on the OMA-DM protocol.

The server 10 is further configured to, when a new module needs to be upgraded, acquire from the CPE 20 information of the new module and adding the information of the new module to the management configuration file.

In particular, the server 10 actively initiates a session to the CPE 20 to acquire the information of the new module to be upgraded and initializes the upgrade interface, which is corresponding to the new module and is in the management configuration file, based on the information of the new module. The server 10 may upgrade a corresponding module of the CPE 20 through this upgrade interface.

That is to say, when the CPE firmware is upgraded based on the OMA-DM protocol, the demand of upgrading a new module can be met merely by modifying the management configuration file on the server 10 side.

Hereinafter, two application examples which apply the technical solution of the present invention will be introduced in conjunction with Figs. 4 to 6.

Fig. 4 is a schematic diagram of a network communication connection situation in an application example of the present invention, and as shown in Fig. 4, the client software based on the TR069 protocol or OMA-DM protocol is installed on the CPE side, and the server software based on the TR069 protocol or OMA-DM protocol is installed on the server side.

The CPE is connected with a TR069 protocol server (TR069 server) on the other side of the network through a TR069 protocol client (shorted as TR069 client) for communications, and the TR069 protocol server remotely controls the TR069 protocol client via the network to remotely configure and manage the CPE. Alternatively, the CPE is connected with an OMA-DM protocol server (OMA-DM server) on the other side of the network through an OMA-DM protocol client (shorted as OMA-DM client) for communications, and the OMA-DM protocol server remotely controls the OMA-DM protocol client via the network to remotely configure and manage the CPE.

### First application example

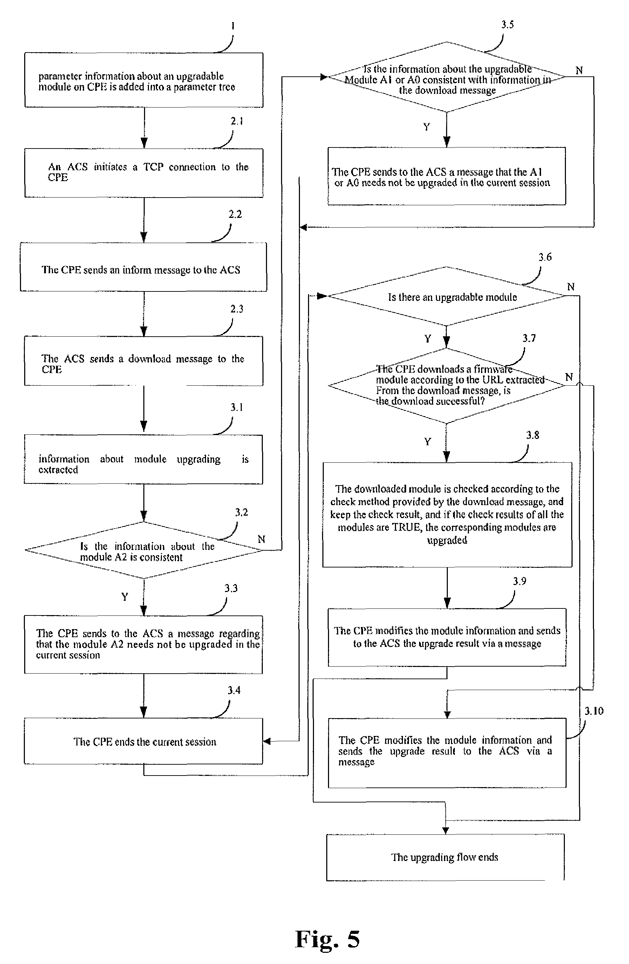

Hereinafter, the example of the present invention which is applied to the TR069 protocol will be described in conjunction with Fig. 5, given that there are totally five modules in the CPE firmware that may be upgraded, i.e., A0, A1, A2, A3 and A4, the TR069 server is an ACS (Auto-Configuration Server), the TR069 client is CPE (Customer Premises Equipment), and the parameter tree file is a standard parameter module TR98 document tree.xml;
step 1: detail information of an upgradable module in the CPE firmware is added to a parameter tree file tree.xml.

A child node DeviceModuleFirmware is added under a node InternetGatewayDevice of the parameter tree file tree.xml based on the home gateway data model TR098 document, and this child node DeviceModuleFirmware is a multi-example node, the path corresponding thereto in the parameter tree model is InternetGatewayDevice . DeviceModuleFirmware.{i}, and the leaf node or attribute of this node DeviceModuleFirmware comprises:
the name of the "name" attribute of the child node DeviceModuleFirmware in the parameter tree is name, the type is string_64 (string type, the maximum length is 64 bytes);
the name of the "whether there is a dependence module" attribute of the child node DeviceModuleFirmware in the parameter tree is IsDepend, the type is BOOLEAN (Boolean type, the value is TRUE or FALSE);
the name of the "module version information" attribute of the child node DeviceModuleFirmware in the parameter tree is version, the type is string_64 (string type, the maximum length is 64 bytes);
the name of the "check code" attribute of the child node DeviceModuleFirmware in the parameter tree is CheckCode, the type is string_1024 (string type, the maximum length is 1024 bytes);
the name of the "module integrity check method" attribute of the child node DeviceModuleFirmware in the parameter tree is CheckMethod, the type is string_64 (string type, the maximum length is 64 bytes);

The "dependence module" is a child node of the child node DeviceModuleFirmware, the name thereof is DependModule, the corresponding path thereof in the parameter tree is InternetGatewayDevice. DeviceModuleFirmware.{i}.DependModule.{i}., the attribute name of the DependModule node is name, the type thereof is string_64 (string type, the maximum length is 64 bytes);

The node paths corresponding to modules A0, A1, A2, A3, and A4 in the parameter tree are:
InternetGatewayDevice.DeviceModuleFirmware.0.
InternetGatewayDevice.DeviceModuleFirmware.1.
InternetGatewayDevice.DeviceModuleFirmware.2.
InternetGatewayDevice.DeviceModuleFirmware.3.
InternetGatewayDevice.DeviceModuleFirmware.4.
Step 2: the upgradable module A2 in the CPE firmware is upgraded;
it can be known from the module dependence node DependModule of the corresponding child node DeviceModuleFirmware, which corresponds to the module A2, in the parameter tree that upgrading the module A2 in the CPE firmware depends on the modules A0 and A1, and therefore when upgrading the module A2, the modules A0 and A1 will be upgraded simultaneously. Step 2 can in particular comprise:
   step 2.1: the ACS initiates a TCP (Transmission Control Protocol) connection to the CPE;
   step 2.2: after receiving the TCP connection request initiated by the ACS, the CPE sends an inform message to the ACS to start a new session;
   step 2.3: after receiving the inform message sent from the CPE, the ACS sends an informRespose message, and at the same time a new session has been established successfully, then the ACS sends to the CPE a download message of the firmware module A2 to be upgraded. The download message contains the sizes, check codes, check methods, version information, etc. of the modules A0, A1, and A2.
Step 3: the CPE downloads the module and upgrades same. Step 3 can in particular comprise:
step 3.1: after receiving the download message of the ACS, the CPE extracts module upgrade information therefrom, including a URL for downloading the module, module version information, a module check method and a module check code;
step 3.2: the CPE detects whether the information about the currently upgradable modules A2, A1 and A0 is consistent with the information in the download information, wherein the detected information includes: module version information, a module check method, a module check code and module size, and if the information about the module A2 is consistent completely, then perform step 3.3, otherwise, perform step 3.5;
step 3.3, the CPE sends to the ACS the content that the information about the module A2 is consistent with the information in the download message and there is no need to upgrade the module A2 in the current session, and then perform step 3.4;
step 3.4, the current session is ended, and then perform step 3.6;
step 3.5, if the information about the upgradable module A1 or A0 is consistent with the information in the download message, then the CPE sends to the ACS a message regarding that there is no need to upgrade the module A1 or A0 in the current session and then perform step 3.4;
step 3.6, it is judged whether there is a module to be upgraded, if yes, then perform step 3.7, otherwise, end the upgrading flow;
step 3.7, the CPE downloads a corresponding module according to the URL for downloading the module, wherein the URL is extracted from the download message, if the corresponding module cannot be downloaded from the URL, perform step 3.10; and if the corresponding module can be downloaded from the URL, perform step 3.8;
step 3.8, the downloaded module is checked according to the check method provided by the download message, and keep the check result, if the check results of all the modules are TRUE, the corresponding modules are to be upgraded, and then perform step 3.9;
Step 3.9: the CPE modifies the check method, check code, version number and module size of the module. The CPE sends the upgrade result to the ACS via an inform message in the next session. The upgrading flow ends;
step 3.10: the CPE actively initiates a session and sends the error information to the ACS via an inform message. In particular, the CPE adds the error information that the modules cannot be downloaded from the URL in a session message.

### Second application example

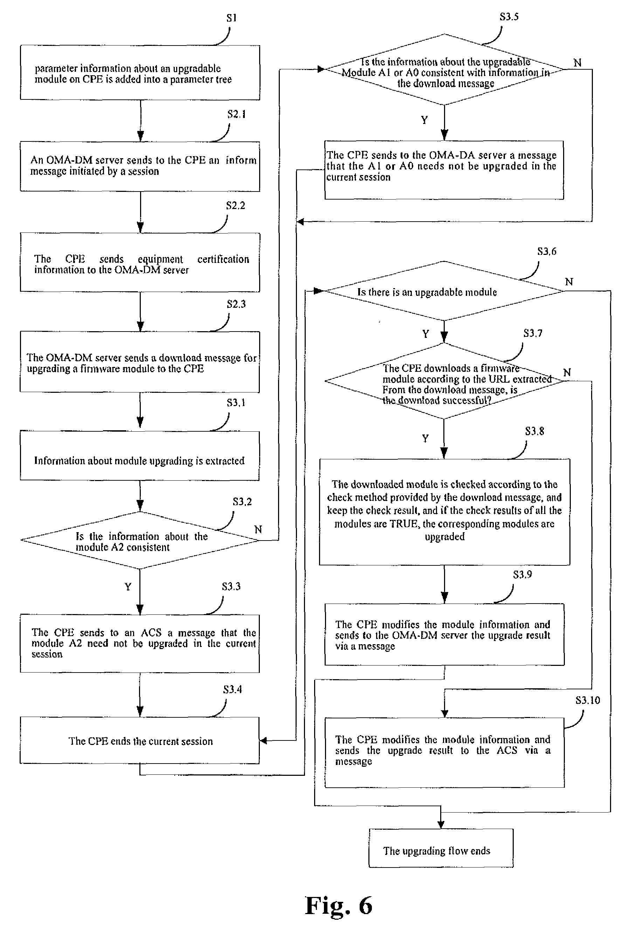

Hereinafter, the application example of the present invention which is applied to the OMA-DM protocol will be described in conjunction with Fig. 6, given that there are totally five upgradable modules in the CPE firmware, i.e., A0, A1, A2, A3 and A4.
step S1: detail information of upgradable modules in the CPE is added to the parameter tree file tree.xml;
a child node DeviceModuleFirmware is added under the node ./FUMO in the parameter tree file tree.xml based upon the OMA-DM protocol, multiple operations that can be performed on this child node DeviceModuleFirmware are <get/><add/><delete/>, and the leaf nodes or attributes of this child node DeviceModuleFirmware comprises the following.

The name of the leaf node "name" of the child node DeviceModuleFirmware in the parameter tree is name, the type is chr_64 (string type, the maximum length is 64 bytes), and operations that may be performed on this leaf node are <get/><replace/>;

The name of the leaf node "whether there is a dependence module" of the child node DeviceModuleFirmware in the parameter tree is IsDepend, the type is bool (bool type, the value is TRUE or FALSE), and operations that may be performed on this leaf node are <get/><replace/>;

The name of the leaf node "module version information" of the child node DeviceModuleFirmware in the parameter tree is version, the type is chr_64 (string type, the maximum length is 64 bytes), and operations that may be performed on this leaf node are <get/><replace/>;

The name of the leaf node "check code" of the child node DeviceModuleFirmware in the parameter tree is CheckCode, the type is chr_1024 (string type, the maximum length is 1024 bytes), and operations that can be performed on this leaf node are <get/><replace/>;

The name of the leaf node "module integrity check information" of the child node DeviceModuleFirmware in the parameter tree is CheckMethod, the type is chr_64 (string type, the maximum length is 64 bytes), and operations that may be performed on this leaf node are <get/><replace/>;

The "dependence module" is a child node of the child node DeviceModuleFirmware or referred to as module dependence node, the name thereof is DependModule, the corresponding path thereof in the parameter tree is ./FUMO/DeviceModuleFirmware/{i}/DependModule, operations that can be performed on this node DependModule are <get/><add/><delete/>; the leaf node "name" of the node DependModule is name, the type thereof is chr_64 (string type, the maximum length is 64 bytes), and operations that can be performed on this leaf node are <get/><replace/>;

The node paths corresponding to modules A0, A1, A2, A3, and A4 in the parameter tree are:
./FUMO/DeviceModuleFirmware/0/
./FUMO/DeviceModuleFirmware/1/
./FUMO/DeviceModuleFirmware/2/
./FUMO/DeviceModuleFirmware/3/
./FUMO/DeviceModuleFirmware/4/

When it is required to upgrade a new module except A0 to A4, a node ./FUMO of the parameter tree file is added on the OMA-DM server side, that is, an upgrade interface of the upgradable module, the OMA-DM actively initiates a session to acquire information about an upgradable module in the CPE and then initializes the upgrade interface of the upgradable module according to the information about the upgradable module on the CPE, and the OMA-DM server upgrades a corresponding module via this upgrade interface.
Step S2: the upgradable module A2 in the CPE firmware is upgraded;
it can be known from the module dependence node DependModule of the child node DeviceModuleFirmware, which corresponds to the module A2, in the parameter tree that upgrading the module A2 in the CPE firmware depends on the modules A0 and A1, and therefore when upgrading the module A2, the modules A0 and A1 will be upgraded simultaneously; and step S2 can in particular comprise:
   step S2.1: the OMA-DM server sends a session initiation inform message to the CPE;
   step S2.2: after receiving the session initiation inform message sent by the OMA-DM server, the CPE sends equipment authentication information to the OMA-DM;
   step S2.3: the OMA-DM server sends to the CPE a download message for upgrading the firmware module A2.
Step S3: the CPE downloads the module and upgrades same. Step S3 can in particular comprise:
step S3.1: after receiving the download message from the OMA-DM server, the CPE extracts information for upgrading the module therefrom, wherein the information includes a URL for downloading the module, module version information, module check method and module check code;
step S3.2: the CPE detects whether the information about the currently upgradable modules A2, A1 and A0 is consistent with the information in the download message, wherein the detected information includes: module version information, module check method, module check code and module size, if the information about the module A2 is consistent completely, then perform step S3.3, otherwise, perform step S3.5;
step S3.3: the CPE sends to the ACS the content that information about the module A2 is consistent with the information in the download message and there is no need to upgrade A2, and then perform step S3.4;
step S3.4: the current session is ended, and then perform step S3.6;
step S3.5: if the information about the upgradable module A1 or A0 is consistent with the information in the download message, then the CPE sends to the OMA-DM server a message regarding that there is no need to upgrade the module A1 or A0 in the current session and then perform step S3.4;
step S3.6: it is judged whether there is a module to be upgraded, if yes, then perform step S3.7, otherwise, end the upgrading flow;
step S3.7: the CPE downloads a corresponding module according to the URL for downloading the module extracted from the download message, if the corresponding module cannot be downloaded from the URL, perform step S3.10; and if the corresponding module can be downloaded from the URL, perform step S3.8;
step S3.8: the downloaded module is checked according to the check method provided by the download message, and keep the check result, if the check results of all the modules are TRUE, start to upgrade the corresponding module, and then perform step S3.9;
Step S3.9: the CPE modifies the check method, check code, version number and module size of the module and sends the upgrade result to the OMA-DM server via a message in the next session, and the upgrading flow ends;
step S3.10: the CPE actively initiates a session and sends the error information to the OMA-DM server via a message. In particular, the CPE initiates a new session to the OMA-DM server and adds the error information that the module cannot be downloaded from the URL in a session message.

In the method and system for upgrading the CPE firmware based on TR069/OMA-DM protocol proposed in the present invention, the special points are that the information about the upgradable modules in the CPE firmware is added to a parameter tree, the upgrade management of the upgradable modules in the equipment firmware is realized by the parameter tree, each upgradable module corresponds to one upgrade interface (a node in the parameter tree) and a check code for checking the module integrity, and when a plurality of modules are upgraded simultaneously, if the integrity check of any one or more modules fails, it is merely required to download the module the check of which fails again, and there is no need to download the other modules, which improves the efficiency of the firmware upgrade process; and since the detail information about the upgradable modules in the firmware is added to the parameter tree, the required modules can be selected conveniently for upgrading.

By way of the description of particular embodiments, the technical means which are taken by the present invention for achieving intended objects and the effects thereof can be understood deeply and concretely, and the drawings are merely used for providing reference and illustration, rather than limiting the present invention.

## Claims

1. A method for upgrading Customer Premises Equipment (CPE) firmware, **characterized by** comprising:
a server adding module information in the CPE firmware to a management configuration file; and
the server upgrading a module to be upgraded in the CPE firmware based on the management configuration file.

2. The method for upgrading the CPE firmware according to claim 1, **characterized in that** the server adding the module information in the CPE firmware to the management configuration file is:
the management configuration file being a parameter tree file; each module corresponding to a node in the parameter tree file, adding a child node under each node, in leaf nodes of the child node storing various attributes of the module, wherein the attributes comprise module name, information whether there is a dependence module during upgrading, module version information, check code and module integrity check method; and
adding a module dependence node under the child node, and in the module dependence node storing dependence module information which is needed when upgrading the module.

3. The method for upgrading the CPE firmware according to claim 1, **characterized in that** the server upgrading the module to be upgraded in the CPE firmware based on the management configuration file is:
after the server starts a session with the CPE, the server sending to the CPE information of the module to be upgraded; and
the CPE judging a module truly to be upgraded according to the information of the module to be upgraded, and downloading and upgrading the module truly to be upgraded.

4. The method for upgrading the CPE firmware according to claim 3, **characterized in that** the information of the module to be upgraded comprises: a module download address, module version information, module check method, module check code and module size; and
the CPE judging the module truly to be upgraded according to the information of the module to be upgraded and downloading and upgrading the module truly to be upgraded is:
after receiving the information of the module to be upgraded, the CPE judging whether the information of the module to be upgraded is consistent with corresponding module information saved locally, and if the information of the module to be upgraded is consistent with the corresponding module information saved locally, no upgrade needed; and if there is a module which has inconsistent information, downloading the module according to the module download address; and
checking the downloaded module according to the check method corresponding to the module, and if the check result is true, then starting to upgrade the module, otherwise, reporting error information to the server.

5. The method for upgrading the CPE firmware according to any one of claims 1 to 4, **characterized in that** in the case that the server upgrades the CPE firmware based on Open Mobile Alliance-Device Management (OMA-DM) protocol, when it is required to upgrade a new module, the server acquiring from the CPE information of the new module and adding the information of the new module into the management configuration file.

6. A system for upgrading Customer Premises Equipment (CPE) firmware, **characterized by** comprising: a server and CPE; wherein
the server is configured to add module information in the CPE firmware to a management configuration file and upgrade a module to be upgraded in the CPE firmware based on the management configuration file; and
the CPE is configured to upgrade the module to be upgraded in cooperation with the server.

7. The system for upgrading the CPE firmware according to claim 6, **characterized in that** the management configuration file is a parameter tree file; each module corresponds to a node in the parameter tree file, a child node is added under each node, various attributes of the module are stored in leaf nodes of the child node, wherein the attributes comprise: module name, information whether there is a dependence module during upgrading, module version information, check code and module integrity check method; and
a module dependence node is added under the child node, and the dependence module information which is needed when upgrading the module is stored on the module dependence node.

8. The system for upgrading the CPE firmware according to claim 6, **characterized in that**
the server is further configured to, after starting a session with the CPE, send to the CPE information of the module to be upgraded; and
the CPE is further configured to judge a module truly to be upgraded according to the information of the module to be upgraded, and to download and upgrade the module truly to be upgraded.

9. The system for upgrading the CPE firmware according to claim 8, **characterized in that** the information of the module to be upgraded comprises a module download address, module version information, module check method, module check code and module size; and
the CPE in particular comprises a judgment downloading module and a check upgrading module; wherein
the judgment downloading module is configured to, after receiving the information of the module to be upgraded, judge whether the information of the module to be upgraded is consistent with corresponding module information saved locally, and if the information of the module to be upgraded is consistent with the corresponding module information saved locally, then need no upgrade; and if there is a module which has inconsistent information, then download the module according to the module download address; and
the check upgrading module is configured to check the downloaded module according to the check method corresponding to the module, and if the check result is true, then start to upgrade the module, otherwise, report error information to the server.

10. The system for upgrading the CPE firmware according to any one of claims 6 to 9, **characterized in that** in the case that the server upgrades the CPE firmware based on Open Mobile Alliance-Device Management (OMA-DM) protocol, when it is required to upgrade a new module, the server acquires from the CPE information of the new module and adds the information of the new module into the management configuration file.
